# EUROPEAN PATENT APPLICATION

(11) **EP 4 513 664 A1**
(43) Date of publication of application: **26.02.2025**
(21) Application number: 23843397.3
(22) Date of filing: 19.07.2023
(51) Int. Cl.: H01M 50/593, H01M 50/24, H01M 50/213, H01M 50/559

(54) **BATTERY, AND BATTERY PACK AND VEHICLE COMPRISING BATTERY**

(30) Priority: 19.07.2022 KR 20220089126
(71) Applicant: LG Energy Solution, Ltd., Seoul 07335 (KR)
(72) Inventor: LIM, Gu-Min, Daejeon 34122 (KR); LEE, Byoung-Gu, Daejeon 34122 (KR); KANG, Bo-Hyun, Daejeon 34122 (KR); KIM, Do-Gyun, Daejeon 34122 (KR); OH, Jeong-Seop, Daejeon 34122 (KR); LEE, Kwan-Hee, Daejeon 34122 (KR); JO, Min-Ki, Daejeon 34122 (KR); HWANGBO, Kwang-Su, Daejeon 34122 (KR)
(74) Representative: Goddar, Heinz J.
(86) International application number: PCT/KR2023/010450
(87) International publication number: WO 2024/019551

(57) **Abstract**

A battery according to an embodiment of the present disclosure includes an electrode assembly; a battery housing accommodating the electrode assembly through an open portion on a side; a terminal electrically connected to the electrode assembly through a closed portion opposite the open portion of the battery housing; a gasket interposed between the terminal and the battery housing; and a cover member covering the gasket in an area of contact between the gasket and the electrode assembly.

## Description

### TECHNICAL FIELD

The present disclosure relates to a battery and a battery pack and a vehicle comprising the same.

The present application claims priority to Korean Patent Application No. 10-2022-0089126 filed on July 19, 2022 in the Republic of Korea, the disclosure of which is incorporated herein by reference.

### BACKGROUND ART

Due to being easily applicable to various products and having electrical properties such as high energy density, batteries are commonly applied to not only portable devices but also electric vehicles (EVs) or hybrid electric vehicles (HEVs) that are powered by a source of electric power.

Batteries remarkably reduce the use of fossil fuels, and in addition to the primary advantage, they do not generate by-products from the use of energy. From this perspective, batteries are seen as a new source of energy with eco-friendliness and energy efficiency.

The types of batteries widely used at present include lithium ion batteries, lithium polymer batteries, nickel cadmium batteries, nickel hydrogen batteries, nickel zinc batteries or the like. A unit battery cell has an operating voltage of about 2.5V to 4.5V. Accordingly, when higher output voltage is required, a plurality of batteries may be connected in series to form a battery pack. Additionally, the battery pack may be fabricated by connecting the plurality of batteries in parallel according to the charge/discharge capacity required for the battery pack. Accordingly, the number of batteries included in the battery pack and the electrical connection type may be variously set depending on the required output voltage or charge/discharge capacity.

Recently, with the growing need for batteries having high capacity and/or high output, many studies have been made on batteries with safety against thermal events.

When defects or failures occur in batteries while in use, the internal pressure of the batteries may rise and high temperature gases and/or flames may be produced in the batteries, causing thermal event propagation. When thermal events occur in batteries having high capacity and/or high output, damage may be severer.

When the component(s) in the batteries are damaged due to thermal events in the batteries, shorts may occur due to unnecessary electrical contact between the components. The components serving as positive and negative terminals of the batteries may be electrically insulated from each other by the components having electrical insulation properties. When the components having electrical insulation properties are damaged in high temperature environments, a direct electrical connection between the positive and negative terminals may occur and thermal events may spread so fast.

Accordingly, it is necessary to prevent damage to the components for electrical insulation when the components in the battery are exposed to high temperature environments due to defects or failures in the battery while in use, thereby ensuring safety of the battery while in use.

### SUMMARY

### Technical Problem

The present disclosure is designed to solve the above-described problem, and therefore the present disclosure is directed to maintaining electrical insulation between a terminal of a battery and a battery housing having opposite polarities even in high temperature environments.

However, the technical problem to be solved by the present disclosure is not limited to the above-described problem, and these and other problems will be clearly understood by those skilled in the art from the following description.

### Technical Solution

To solve the above-described problem, a battery according to an embodiment of the present disclosure includes an electrode assembly; a battery housing accommodating the electrode assembly through an open portion on a side; a terminal electrically connected to the electrode assembly through a closed portion opposite the open portion of the battery housing; a gasket interposed between the terminal and the battery housing; and a cover member covering the gasket in an area where the gasket and the electrode assembly face each other.

The gasket may include an exposed area exposed to an outside of the terminal in the battery housing.

The cover member may cover the exposed area to prevent the exposed area of the gasket from being exposed in a direction facing the electrode assembly.

The battery may include an insulator interposed between the electrode assembly and the closed portion of the battery housing.

The insulator may have an insulator hole having an inner diameter that is equal to or smaller than an outer diameter of a combination of the terminal and the gasket.

The cover member may be integrally formed with the insulator.

The cover member may be disposed in a space inside of the insulator hole along a radial direction of the battery.

The cover member may be disposed between the insulator and the electrode assembly.

The cover member may have a cover member hole having a smaller diameter than the insulator hole.

The battery may include a current collector disposed between the electrode assembly and an inner surface of the closed portion of the battery housing and electrically coupled to the electrode assembly and the terminal.

The cover member may be integrally formed with the current collector.

The terminal may include a coupling portion configured to be coupled to the current collector, and the cover member may extend in an outward direction of the coupling portion to cover the gasket.

A battery pack according to an embodiment of the present disclosure may include the battery.

A vehicle according to an embodiment of the present disclosure may include the battery pack.

### Advantageous Effects

According to an aspect of the present disclosure, it may be possible to maintain electrical insulation between the terminal of the battery and the battery housing having opposite polarities even in high temperature environments.

However, the advantageous effect obtained through the present disclosure is not limited to the above-described effect, and these and other advantageous effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a diagram showing a lower portion structure of a battery according to an embodiment of the present disclosure.
FIG. 2 is a partial enlarged view showing some components of the battery shown in FIG. 1.
FIG. 3 is a diagram showing a lower portion structure of a battery according to an embodiment of the present disclosure that is different from the battery shown in FIGS. 1 and 2.
FIG. 4 is a partial enlarged view showing some components of the battery shown in FIG. 3.
FIG. 5 is a diagram showing a lower portion structure of a battery according to an embodiment of the present disclosure that is different from the battery shown in FIGS. 1 to 4.
FIG. 6 is a partial enlarged view showing some components of the battery shown in FIG. 5.
FIG. 7 is a diagram showing a lower portion structure of a battery according to an embodiment of the present disclosure that is different from the battery shown in FIGS. 1 to 6.
FIG. 8 is a partial enlarged view showing some components of the battery shown in FIG. 7.
FIG. 9 is a diagram showing a lower portion structure of a battery according to an embodiment of the present disclosure that is different from the battery shown in FIGS. 1 to 8.
FIG. 10 is a partial enlarged view showing some components of the battery shown in FIG. 9.
FIG. 11 is a diagram showing a lower portion structure of a battery according to an embodiment of the present disclosure that is different from the battery shown in FIGS. 1 to 10.
FIG. 12 is a partial enlarged view showing some components of the battery shown in FIG. 11.
FIG. 13 is a diagram showing an exemplary structure of a current collector of the present disclosure.
FIG. 14 is a diagram showing an upper portion structure of a battery according to an embodiment of the present disclosure.
FIG. 15 is a diagram showing a battery pack according to an embodiment of the present disclosure.
FIG. 16 is a diagram showing a vehicle according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

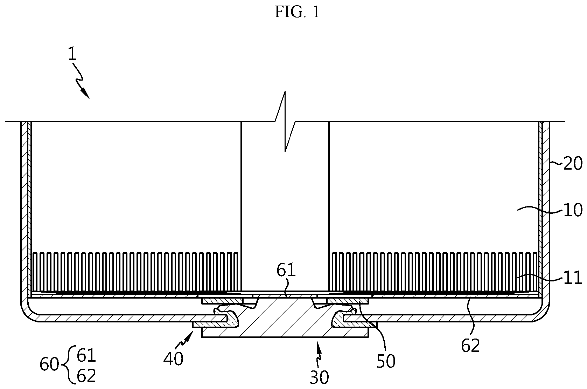

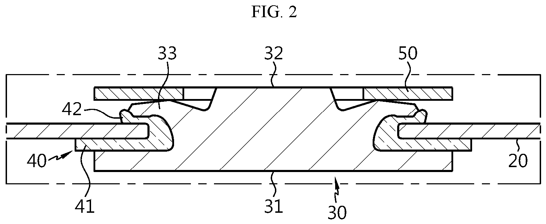

To begin with, referring to FIGS. 1 and 2, a battery 1 according to an embodiment of the present disclosure may include an electrode assembly 10, a battery housing 20, a terminal 30, a gasket 40 and a cover member 50. The battery 1 may be a secondary battery. The battery 1 may be a cylindrical battery.

The electrode assembly 10 may include a positive electrode, a negative electrode and a separator interposed between the positive electrode and the negative electrode. The electrode assembly 10 may be, for example, a jelly-roll type electrode assembly formed by winding a stack of the positive electrode, the negative electrode and the separator.

The battery housing 20 may be configured to accommodate the electrode assembly 10 through an open portion on one side. The battery housing 20 may include a conductive metal. The battery housing 20 may be electrically connected to the electrode assembly 10.

The battery housing 20 may accommodate an electrolyte together with the electrode assembly 10. The terminal 30 may be exposed to the outside of the battery housing 20 through a closed portion opposite the open portion of the battery housing 20. The terminal 30 may be, for example, electrically connected to a first uncoated portion 11 of the electrode assembly 10.

The terminal 30 may include an exposed portion 31, a coupling portion 32 and a flange portion 33. The exposed portion 31 may be exposed to the outside of the battery housing 20. The exposed portion 31 may have a larger diameter (or width) than a hole in the closed portion of the battery housing 20 to allow the insertion of the terminal 30. The coupling portion 32 may be electrically coupled to the electrode assembly 10 in the battery housing 20. The coupling portion 32 may be, for example, disposed at a location corresponding to a winding center hole at the core of the electrode assembly 10. The flange portion 33 may be disposed outside of the coupling portion 32, and extend in a direction facing the closed portion of the battery housing 20. The flange portion 33 may be riveted such that it is bent toward the inner surface of the closed portion of the battery housing 20 from the outer circumference of the coupling portion 32. By the shape deformation of the flange portion 33, the terminal 30 may be fixed to the inner surface of the closed portion of the battery housing 20.

The gasket 40 may be interposed between the terminal 30 and the battery housing 20. The gasket 40 may include a material having electrical insulation properties. The terminal 30 and the battery housing 20 may have opposite polarities, and in this case, the gasket 40 may be configured to prevent shorts caused by the contact between the terminal 30 and the battery housing 20. The gasket 40 may include a material having electrical insulation and chemical resistance to the electrolyte.

The gasket 40 may undergo shape deformation together during the riveting of the terminal 30 in the battery housing 20. The gasket 40 may be interposed between the inner surface of the closed portion of the battery housing 20 and the terminal 30 due to the shape deformation.

The gasket 40 may include a first part 41 and a second part 42. The first part 41 may be interposed between the exposed portion 31 of the terminal 30 and the outer surface of the closed portion of the battery housing 20. The second part 42 may be interposed between flange portion 33 and the inner surface of the closed portion of the battery housing 20. The gasket 40 may include an exposed area exposed to the outside of the terminal 30 in the battery housing 20. For example, at least a portion of the second part 42 of the gasket 40 may be exposed to the outside of the flange portion 33 of the terminal 30.

The cover member 50 may cover the exposed area to prevent the exposed area of the gasket 40 exposed to the outside of the terminal 30 in the battery housing 20 from being exposed in a direction facing the electrode assembly 10. The cover member 50 may be configured to cover the gasket 40 in the area of contact between the gasket 40 and the electrode assembly 10.

The cover member 50 may include a material having a higher melting point than the gasket 40. The cover member 50 may include, for example, a flame retardant material. The cover member 50 may include, for example, glass fiber. The cover member 50 may further include at least one type of material selected from the group consisting of polypropylene (PP), polybutyleneterephthalate (PBT) and polyphenylene sulfide (PPS) and a flame retardant material and/or glass fiber. In this case, the flame retardant material and/or the glass fiber may be present in an amount of approximately 30 wt% or less. However, the material of the cover member 50 is not limited thereto, and in the case where the cover member 50 is disposed in non-contact with the inner surface of the closed portion of the housing 20, the cover member 50 may include a metal. In this case, it may be possible to increase the melting point of the cover member 50, thereby improving the function of the cover member 50 to protect the gasket 40.

The battery 1 of the present disclosure may be configured to prevent the exposed part of the gasket 40 to the outside of the terminal 30 in the battery housing 20 from being exposed in the direction facing the electrode assembly 10. Accordingly, when an abnormal high temperature environment is created due to a thermal event in the battery 1, it may be possible to prevent the gasket 40 from melting to prevent the contact between the terminal 30 and the battery housing 20 having opposite polarities.

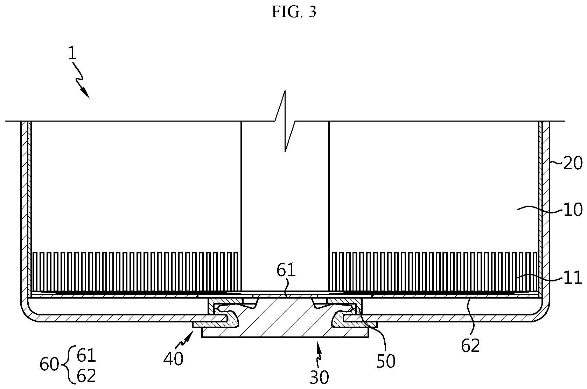

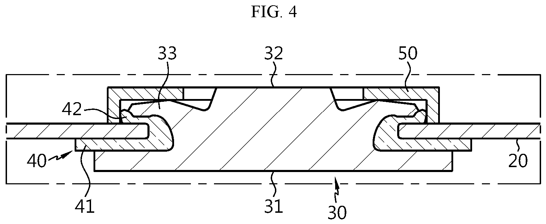

Subsequently, referring to FIGS. 3 and 4, as opposed to FIGS. 1 and 2, the cover member 50 is configured to fill a portion of a space between the inner surface of the closed portion of the housing 20 and the electrode assembly 10. When the battery 1 includes a current collector (a first current collector) 60 as described below, the cover member 50 may be interposed between the inner surface of the closed portion of the housing 20 and the current collector 60. The current collector 60 will be described in detail.

The cover member 50 may be configured to cover the end of the second part 42 of the gasket 40 and act as a spacer between the inner surface of the closed portion of the housing 20 and the electrode assembly 10. In this case, the cover member 50 may include a material having electrical insulation properties. In this case, it may be possible to ensure electrical insulation between the housing 20 and the terminal 30 and/or electrical insulation between a first electrode of the electrode assembly 10 and the housing 20.

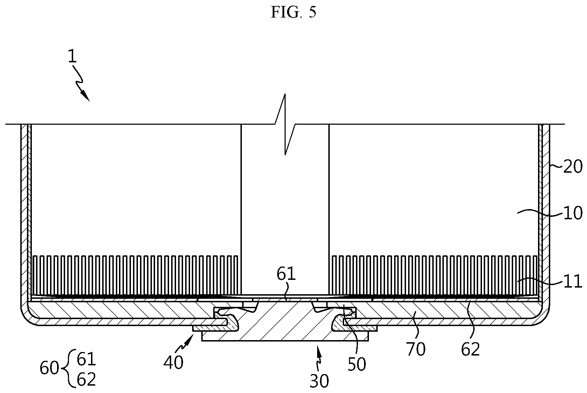

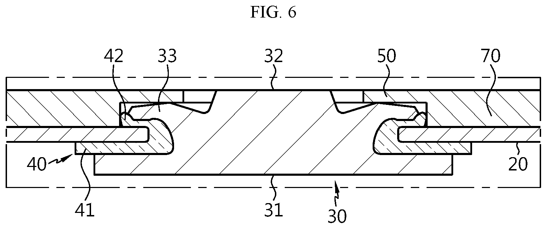

Subsequently, referring to FIGS. 5 and 6, the battery 1 may include an insulator 70. The insulator 70 may be interposed between the electrode assembly 10 and the closed portion of the housing 20. The insulator 70 may include a material having electrical insulation properties. The insulator 70 may have an insulator hole having an inner diameter that is equal to or smaller than an outer diameter of a combination of the terminal 30 and the gasket 40. The terminal 30 may be exposed to the electrode assembly 10 through the insulator hole.

When the battery 1 includes the insulator 70, the cover member 50 may be integrally formed with the insulator 70. The cover member 50 may have a smaller thickness than the insulator 70. The cover member 50 may extend from the inner circumferential surface of the insulator 70 toward the center along the radial direction of the battery 1 to cover the exposed area (exposed to the outside of the terminal 30) of the gasket 40.

When the cover member 50 is integrally formed with the insulator 70, it may be possible to ensure electrical insulation between the electrode assembly 10 and the inner surface of the housing 20 and protect the gasket 40 exposed to the outside of the terminal 30 by a single component.

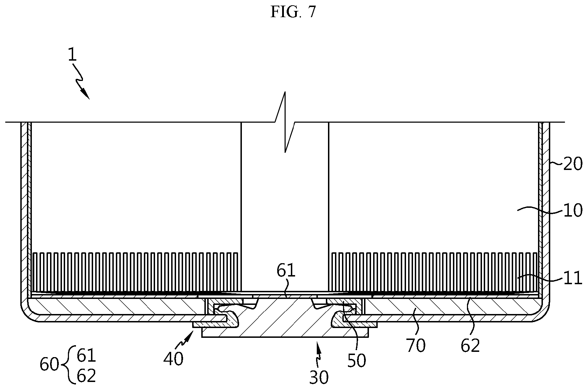

Subsequently, referring to FIGS. 7 to 10, the cover member 50 may be provided as a component that is separate from the insulator 70.

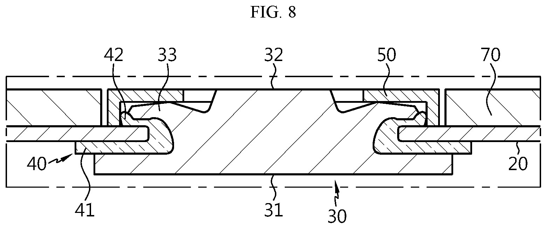

To begin with, referring to FIGS. 7 and 8, the cover member 50 may be, for example, disposed in a space inside of the insulator hole along the radial direction of the battery 1. In this case, the cover member 50 may include a material having electrical insulation.

The cover member 50 may be configured to fill at least a portion of the remaining space excluding the filled space by the insulator 70 in the space between the electrode assembly 10 and the inner surface of the closed portion of the housing 20. The cover member 50 may have a thickness corresponding to a distance between the electrode assembly 10 and the inner surface of the closed portion of the housing 20. The cover member 50 may have a cover member hole having a smaller diameter than the insulator hole. The terminal 30 may be exposed to the electrode assembly 10 through the cover member hole.

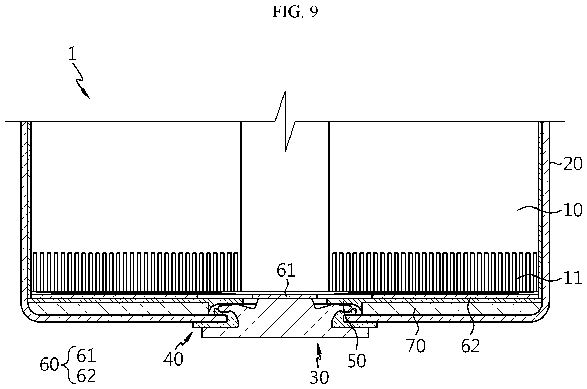

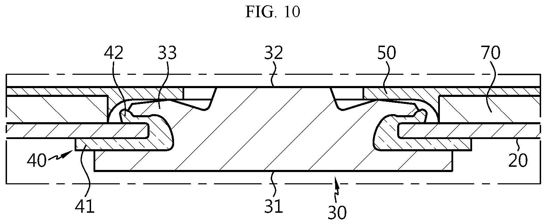

Subsequently, referring to FIGS. 9 and 10, the cover member 50 may be disposed between the insulator 70 and the electrode assembly 10. In this case, the cover member 50 may include an electrical insulating material, and may include a metal. In the case where the cover member 50 includes a metal, it may be possible to adequately increase the melting point of the cover member 50, thereby protecting the gasket 40 from the high temperature environment more effectively.

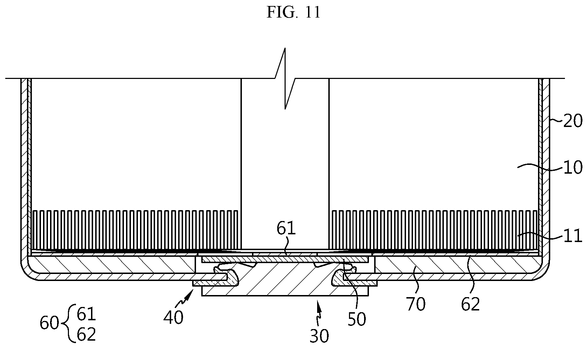

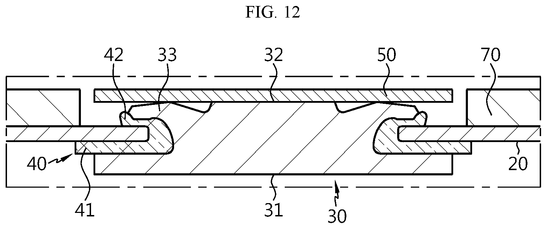

Subsequently, referring to FIGS. 11 and 12, the battery 1 may include the current collector (the first current collector) 60. The battery 1 shown in FIGS. 1 to 10 may also include the current collector 60. The current collector 60 may be disposed between the electrode assembly 10 and the inner surface of the closed portion of the battery housing 20. The current collector 60 may be configured to electrically connect the first electrode of the electrode assembly 10 to the terminal 30.

The current collector 60 may be electrically coupled to the electrode assembly 10 and the terminal 30. The current collector 60 may be coupled to the first uncoated portion 11 of the electrode assembly 10. The first electrode of the electrode assembly 10 may have the first uncoated portion 11 extending along the winding direction at an end portion thereof. Accordingly, the electrode assembly 10 may have the first uncoated portion 11 on one surface. The first uncoated portion 11 may, for example, extend in the downward direction of the electrode assembly 10.

When the battery 1 includes the current collector 60, the cover member 50 may be integrally formed with the current collector 60. In this case, it may be possible to protect the gasket 40 from the high temperature environment through the application of the current collector 60 without needing to apply any component for protection of the gasket 40. When the cover member 50 is integrally formed with the current collector 60, the cover member 50 may include a metal, and accordingly, the melting point of the cover member 50 may be sufficiently high. Accordingly, it may be possible to protect the gasket 40 from the high temperature environment more effectively.

As described above, the terminal 30 may have the coupling portion 32 configured to be coupled to the current collector 60. In this instance, the cover member 50 may extend in the outward direction of the coupling portion 32 and be configured to cover the gasket 40 exposed to the outside of the terminal 30.

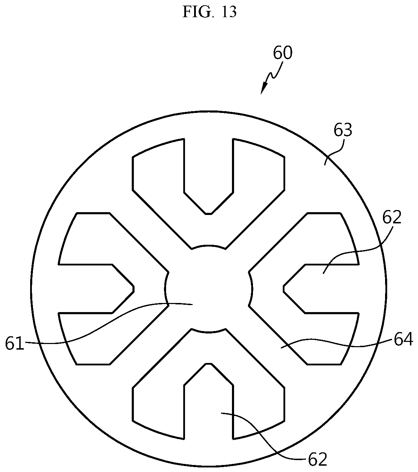

Meanwhile, referring to FIG. 13 together with FIGS. 11 and 12, the current collector 60 may include a first coupling portion 61 and a second coupling portion 62. The first coupling portion 61 may be configured to be electrically coupled to the terminal 30. The second coupling portion 62 may be configured to be electrically coupled to the electrode assembly 10. The first coupling portion 61 and the second coupling portion 62 may be spaced apart from each other along the radial direction of the battery 1. The current collector 60 may include a connection portion 63 to electrically connect the first coupling portion 61 to the second coupling portion 62. The connection portion 63 may be approximately in a rim shape. The first coupling portion 61 may extend inward from the connection portion 63. The current collector 60 may include a bridge 64 to connect the connection portion 63 to the first coupling portion 61. The bridge 64 may extend inward from the connection portion 63. The first coupling portion 61 may be located approximately at the center on the inner side of the connection portion 63. The first coupling portion 61 may be disposed at a location corresponding to the winding center hole at the core of the electrode assembly 10.

As described above, in the battery 1 of the present disclosure, the first coupling portion 61 and the second coupling portion 62 may be spaced apart from each other along the radial direction of the battery 1, and the gasket 40 exposed to the outside of the terminal 30 may be exposed to the electrode assembly 10 through a gap between the first coupling portion 61 and the second coupling portion 62. Accordingly, despite the presence of the current collector 60, there may be damage risks of the gasket 40 caused by high temperature gases and/or flames produced from the electrode assembly 10. Accordingly, with the cover member 50 integrally formed with the current collector 60 and configured to cover the exposed area of the gasket 40, it may be possible to remove or significantly reduce the damage risks of the gasket 40.

When the cover member 50 is integrally formed with the current collector 60, the cover member 50 may extend in the outward direction of the battery 1 from the first coupling portion 61, and may extend in the inward direction of the battery 1 from the second coupling portion 62.

Meanwhile, the battery 1 shown in FIGS. 1 to 10 may also include the current collector 60, and in this case, the cover member 50 may be disposed at a location corresponding to the gap between the first coupling portion 61 and the second coupling portion 62 of the current collector 60.

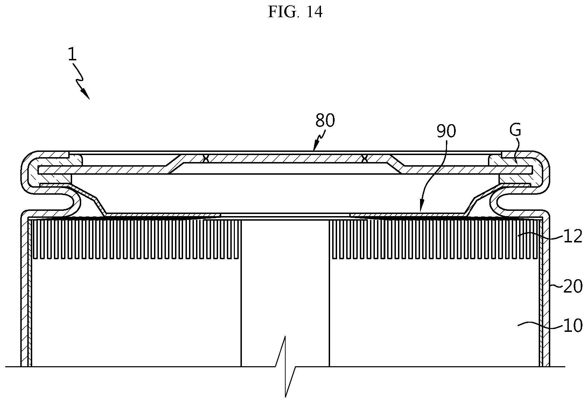

Subsequently, referring to FIG. 14, the battery 1 according to an embodiment of the present disclosure may include a cap 80. The cap 80 may be configured to cover the open portion on one side of the battery housing 20. The cap 80 may include a metal.

The cap 80 may have a vent. The vent may be more vulnerable than any other surrounding area of the cap 80. The vent may, for example, have a smaller thickness than the remaining area. The vent may be, for example, a notched area in one or two surfaces of the cap 80. The vent may extend in the shape of a closed loop around the center of the cap 80. The vent may be formed continuously or discontinuously.

As described above, when the battery 1 of the present disclosure has the vent, it may be possible to prevent the rise in the internal pressure of the battery 1 above a predetermined level in the event of defects or failures in the battery 1. However, despite the presence of the vent, gases and/or flames cannot be vented through the closed portion of the battery housing 20, and as a consequence, the gasket 40 may be exposed to the high temperature environment. Accordingly, the closed portion of the battery housing 20 needs the cover member 50 as described above.

The battery 1 may include a current collector (a second current collector) 90. The current collector 90 may be configured to electrically connect a second electrode of the electrode assembly 10 to the battery housing 20. The current collector 90 may be disposed on one surface of the electrode assembly 10. The current collector 90 may be electrically coupled to a second uncoated portion 12 of the electrode assembly 10. The second electrode of the electrode assembly 10 may have the second uncoated portion 12 extending along the winding direction at an end portion thereof. Accordingly, the electrode assembly 10 may have the second uncoated portion 12 on one surface. The second uncoated portion 12 may, for example, extend in the upward direction of the electrode assembly 10.

The battery 1 may include a sealing member G interposed between the cap 80 and the inner surface of the battery housing 20. When the sealing member G is included, the current collector 90 may be interposed between the sealing member G and the inner surface of the battery housing 20.

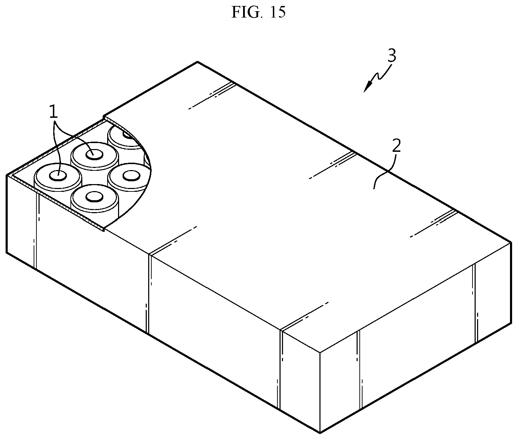

Subsequently, referring to FIG. 15, a battery pack 3 according to an embodiment of the present disclosure may include at least one battery 1 of the present disclosure as described above. The battery 1 may be accommodated in a pack housing 2. The battery pack 3 may include a component for electrical connection of the batteries 1 and/or a Battery management system (BMS) configured to control the charge and discharge of the battery 1.

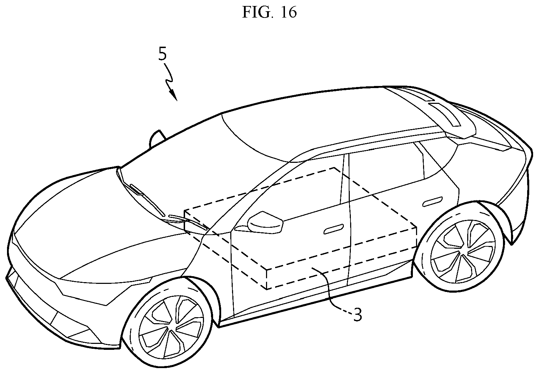

Subsequently, referring to FIG. 16, a vehicle 5 according to an embodiment of the present disclosure includes at least one battery pack 3. The vehicle 5 may be powered and operated by the battery pack 3. The vehicle 5 may be, for example, a hybrid electric vehicle (HEV) or an electric vehicle (EV).

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

### [Description of Reference Numerals]

1: Battery
2: Pack housing
3: Battery pack
5: Vehicle
10: Electrode assembly
11: First uncoated portion
12: Second uncoated portion
20: Battery housing
30: Terminal
31: Exposed portion
32: Coupling portion
33: Flange portion
40: Gasket
41: First part
42: Second part
50: Cover member
60: Current collector (First current collector)
61: First coupling portion
62: Second coupling portion
63: Connection portion
64: Bridge
70: Insulator
80: Cap
90: Current collector (Second current collector)
G: Sealing member

## Claims

1. A battery, comprising:
an electrode assembly;
a battery housing accommodating the electrode assembly through an open portion on a side;
a terminal electrically connected to the electrode assembly through a closed portion opposite the open portion of the battery housing;
a gasket interposed between the terminal and the battery housing; and
a cover member covering the gasket in an area where the gasket and the electrode assembly face each other.

2. The battery according to claim 1, wherein the gasket includes an exposed area exposed to an outside of the terminal in the battery housing.

3. The battery according to claim 2, wherein the cover member covers the exposed area to prevent the exposed area of the gasket from being exposed in a direction facing the electrode assembly.

4. The battery according to claim 1, comprising:
an insulator interposed between the electrode assembly and the closed portion of the battery housing.

5. The battery according to claim 4, wherein the insulator has an insulator hole having an inner diameter that is equal to or smaller than an outer diameter of a combination of the terminal and the gasket.

6. The battery according to claim 4, wherein the cover member is integrally formed with the insulator.

7. The battery according to claim 5, wherein the cover member is disposed in a space inside of the insulator hole along a radial direction of the battery.

8. The battery according to claim 4, wherein the cover member is disposed between the insulator and the electrode assembly.

9. The battery according to claim 5, wherein the cover member has a cover member hole having a smaller diameter than the insulator hole.

10. The battery according to claim 1, comprising:
a current collector disposed between the electrode assembly and an inner surface of the closed portion of the battery housing and electrically coupled to the electrode assembly and the terminal.

11. The battery according to claim 10, wherein the cover member is integrally formed with the current collector.

12. The battery according to claim 11, wherein the terminal includes a coupling portion configured to be coupled to the current collector, and
wherein the cover member extends in an outward direction of the coupling portion to cover the gasket.

13. A battery pack comprising the battery according to any one of claims 1 to 12.

14. A vehicle comprising the battery pack according to claim 13.
